# EUROPEAN PATENT SPECIFICATION

(11) **EP 1 103 733 B1**
(45) Date of publication and mention of the grant of the patent: **12.01.2005**
(21) Application number: 00850198.3
(22) Date of filing: 24.11.2000
(51) Int. Cl.: F16B 37/04, F16B 7/18

(54) **Profile fastening device**
Befestigungsvorrichtung für Profile
Dispositif d'assemblage d'un profilé

(30) Priority: 25.11.1999 SE 9904261
(43) Date of publication of application: 30.05.2001
(73) Proprietor: Scania CV Aktiebolag (publ), 151 87 Södertälje (SE)
(72) Inventor: Pozson, Arpad, 602 37 Norrköping (SE)

(56) References cited:
- DE-A- 2 911 627
- DE-B- 2 440 454
- FR-A- 2 639 411
- GB-A- 906 240
- GB-A- 1 579 941

## Description

### Technical field

The invention relates to a threaded connection according to the preamble to patent claim 1.

### State of the art

In many contexts, two components are joined together by means of a threaded connection as above, whereby one of the components has running through it a hole which accommodates a screw which itself has loosely screwed onto it a nut which is intended to be introduced into an open recess in the other component and which, after rotation by means of the screw reaches a final position under flanges which face one another in the recess. Tightening the screw results in the nut abutting against the underside of the flanges and thereby holding the two components together.

Proper functioning of the threaded connection depends on the nut reaching the correct position under the flanges facing one another in the recess. As it often becomes impossible to continue to see the nut, particularly in cases where large or long parts are being joined together, it is often difficult to ensure that it has reached the correct position. Faulty fitting, e.g. the nut still being in the recess and capable of being screwed up further before it abuts against the part which is provided with the screw, is very difficult for the fitter to detect and can obviously result in the threaded connection not functioning in the intended manner, with the disadvantages and risks which may thereby arise.

GB-A-1 579 941 describes a known threaded connection and shows a method of making a screw fixing comprising; presenting to a slotted channel member a fitting having a screw pre-inserted through a clearance hole therein and having a nut threaded on it, either the screw head or the nut constituting an abutment member; passing the abutment member through the slot; rotating the screw or the nut (whichever remains accessible) in the tightening direction, the screw and the nut being engaged by a tubular member which surrounds the screw shank, the tubular member offering resistance to, but not preventing relative rotation so that the screw and the nut rotate together until the abutment member engages the side walls of the slotted channel member to prevent it rotating further; and continuing to rotate the screw or the nut, as the case may be, in the same direction so as to draw the nut towards the screw head until an abutment surface on the abutment member engages inside the flanges defining the slot in the channel member.

### Object of the invention

The object of the invention is to improve a connection of the type indicated so that it becomes possible to check that the nut has not been fitted incorrectly. A further object is to achieve this by simple and inexpensive means.

### Description of the invention

The object of the invention is achieved by means of a threaded connection which has the features indicated in patent claim 1.

Providing the screw with an unthreaded portion which is longer than the thickness of the second component in which the screw is situated makes it impossible to continue screwing the nut until it abuts against the second component. In the event of incorrect fitting, full tightening therefore results in play at the screw, which means that the fitter can easily detect that the fitting is not correct and can have the opportunity to rectify it. An appropriate way of making it easier to join two components together, particularly where there are a number of screws with nuts, is to carry out a preliminary locking of the nut against one of the components in the intended insertion position by means of a detachable spacing element placed under the screw head before the nut comes to abut against the opposite side of the component. After introducing the nut into the recess, the screw is slackened sufficiently to allow the spacing element to be removed so that the nut can be lowered to the intended position under the flanges for turning to a locking position.

Further features and advantages of the invention are indicated in the ensuing description and patent claims.

The invention is explained below in more detail with reference to an embodiment depicted in the attached drawing.

### Description of the drawing

The drawing comprises:
In Fig. 1 a view from above of a threaded connection before tightening,
in Fig.2 a section II-II in Fig.1,
in Fig.3 a view from above of the threaded connection in Fig. 1 after tightening,
in Fig.4 a section IV-IV in Fig.3,
in Fig.5 a view corresponding to Fig. but with spacing elements,
in Fig.6 a section VI-VI in Fig.5, and
in Fig.7 a section corresponding to Fig.6 but with incorrect fitting.

### Description of an embodiment

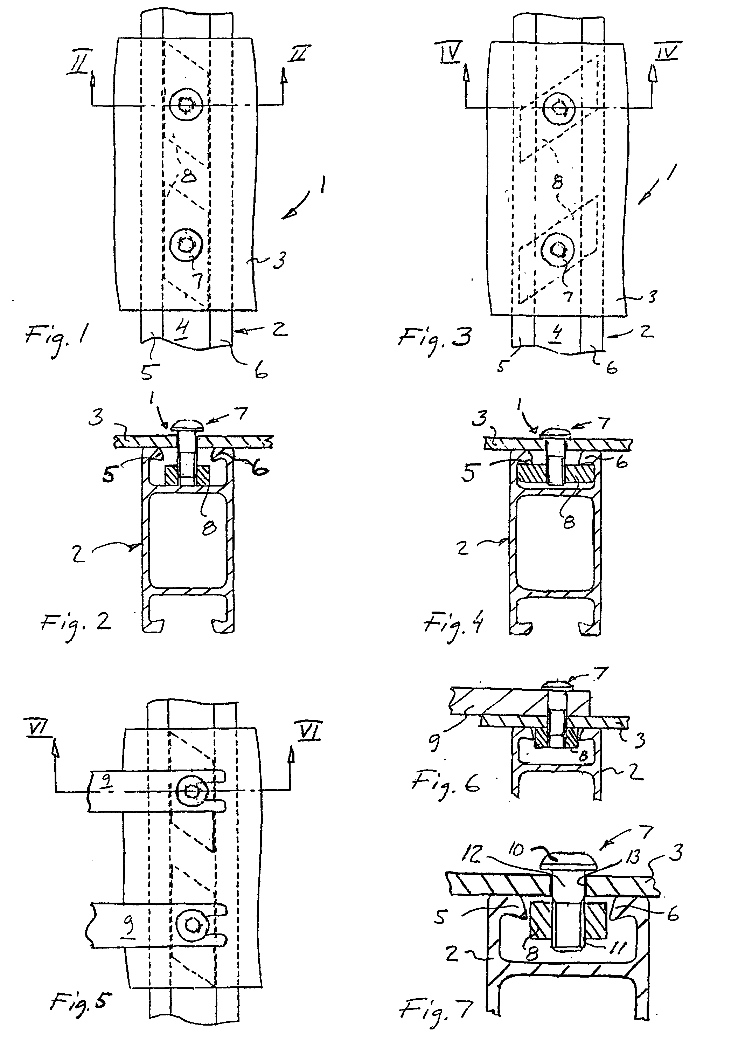

Figs. 1 and 2 depict a threaded connection 1 according to the invention between a first part 2 and a second part 3, each of which is only partly depicted. The first part 2 incorporates a recess 4 opening outwards in which flanges 5 and 6 face one another at the mouth of the recess. The second part 3 has running through it in this case two screws 7, each of which has a nut 8 screwed onto it. These nuts 8 are rather long and are orientated in a fitting position with their longitudinal direction along the recess 4 so as to be insertable into the recess between the flanges 5 and 6 and hence make it possible to join together the parts 2 and 3.

In Figs.3 and 4, the screws 7 have been used to turn the respective nuts 8 to a locking position in which both ends of each of them are under the flanges 5 and 6. Tightening the screws 7 has caused the nuts 8 to abut against the flanges, thereby achieving a threaded connection whereby the parts 2 and 3 are held together. The parts 2 and 3 can be parted by slackening the screws 7.

In cases where large parts are assembled by means of many screws, e.g. body parts of motor vehicles, it may often be difficult to orientate the nuts 8 so that they can easily be introduced into the recess 4 in order thereafter to be turned to a locking position according to Figs.3 and 4. However, using in accordance with Figs.5 and 6 special spacing elements 9 placed between the screw heads 10 and the upper side of the second part 3 makes it easy to use, for example, a template arrangement to orientate the nuts to a predetermined position suitable for insertion in the recess 4 relative to the first part 2 before the parts 2 and 3 are joined together. The screws 7 may be turned sufficiently to lock the nuts 8 in the desired position against the second part. The thickness of the spacing elements 9 is selected such that when the screws 7 are slackened somewhat and the spacing elements 9 are removed the nuts 8 can be pushed far enough in under the flanges 5 and 6 for it to be possible to turn the nuts to a locking position in the same manner as previously. The thickness of the spacing elements 9 thus has to be greater than the thickness of the flanges 5 and 6. Where many screws are required for fitting large or long parts, not all of the screws need a spacer to facilitate achievement of the correct fitting position, as a number of spacers evenly distributed along the recess may suffice.

Reliable and correct fitting is possible by correct mutual positioning of parts 2 and 3 and by turning the nuts 8 to the desired locking position. If for any reason a nut 8 cannot be screwed to the desired position and tightening takes place in the fitting position according to Figs.1,2 and 5,6, there is risk of the nut being pulled past the flanges 5 and 6 and coming instead to abut against the second part 3. This is impossible to detect if the adjacent threaded connections are correctly fitted and parts 2 and 3 are therefore secured to one another. The reason may for example be that the screw is screwed too far into the nut or that the screw is not pressed down during tightening. Other possible causes include machinings, dirt or the like on the nut, or the screw being oblique or not centred. A combination of one or more of these causes is also possible.

According to the invention, incorrect tightening of the nut against the second part 3 is prevented by the fact that the screw, according to Fig.7, has between its head 10 and its thread 11 an unthreaded portion 12, the length of which is greater than the thickness of the second part 3 at the screw hole 13. This means that the nut 8 cannot be pulled firmly against the second part 3 and the resulting clearance between the nut 8 and the second part 3 and the consequent continuing movement despite the screw 7 being in the fully screwed-in position give the fitter an indication that the fitting is not correct, thereby enabling him to take corrective action, e.g. by turning the screw back far enough to enable the nut to be turned to and tightened up in the correct position at which the screw is no longer movable.

For sufficient tightening of the screw 7 to be possible, however, the length of the unthreaded portion has to be smaller than the aggregate of the flange thickness and the thickness of the second part 3 at the screw hole.

## Claims

1. Threaded connection between a first part (2) with a recess (4) which opens outwards, and a second part (3) which has running through it at least one hole (13) through which the threaded connection extends, which threaded connection has a screw (7) with, screwed onto it, a nut (8) which is designed to be insertable in the recess (4) in the first part (2) between flanges (5,6) which face one another and are situated in the recess, and rotatable, by means of the screw which is turnable, to a locking position under the flanges, wherein the nut is designed to abut against the flanges from beneath and thereby to lock the first and second parts (2,3) together by tightening of the screw **characterised in that** the screw (7) has between its head (10) and its thread (11) an unthreaded portion (12), the length of which is greater than the thickness of the second part (3) at the screw hole (13).

2. Threaded connection according to claim 1, **characterised in that** the length of the unthreaded portion (12) is not greater than the aggregate of the flange thickness and the thickness of the second part (3) at the screw hole (13).

3. Threaded connection according to claim 1 or 2, **characterised in that** for assembly of the first and second parts (2,3) the nut (8) is fixable in its fitting position against the underside of the second part (3) by placing a spacing element (9) between the screw head (10) and the upper side of the second part (3) and tightening the screw, the thickness of the spacing element (9) being greater than the aggregate of the flange thickness and the thickness of the second part (2) at the screw hole.

## Patentansprüche

1. Gewindeverbindung zwischen einem ersten Teil (2) mit einer Ausnehmung (4), die sich nach außen öffnet, und einem zweiten Teil (3) mit wenigstens einem durch dieses verlaufenden Loch (13), durch welches sich die Gewindeverbindung erstreckt, wobei die Gewindeverbindung eine Schraube (7) mit einer darauf aufgeschraubten Mutter (8) aufweist, die dazu ausgebildet ist, in die Ausnehmung (4) in dem ersten Teil (2) zwischen Flanschen (5, 6) eingesetzt zu werden, die einander gegenüberliegen und in der Ausnehmung angeordnet sind, und die mittels der Schraube, die drehbar ist, in eine Verriegelungsposition unter den Flanschen verdrehbar ist, wobei die Mutter derart ausgebildet ist, dass sie in Richtung von unten gegen die Flansche zur Anlage kommt und dadurch das erste und das zweite Teil (2, 3) durch Festziehen der Schraube miteinander versperrt, **dadurch gekennzeichnet, dass** die Schraube (7) zwischen ihrem Kopf (10) und ihrem Gewinde (11) einen gewindefreien Abschnitt (12) aufweist, dessen Länge größer als die Dicke des zweiten Teils (3) an dem Schraubenteil (13) ist.

2. Gewindeverbindung nach Anspruch 1, **dadurch gekennzeichnet, dass** die Länge des gewindefreien Abschnitts (12) nicht größer als die Gesamtheit der Flanschdicke und der Dicke des zweiten Teils (3) an dem Schraubenloch (13) ist.

3. Gewindeverbindung nach Anspruch 1 oder 2, **dadurch gekennzeichnet, dass** zur Montage des ersten und zweiten Teils (2, 3) die Mutter (8) in ihrer Passposition an der Unterseite des zweiten Teils (3) fixierbar ist, indem ein Abstandselement (9) zwischen dem Schraubenkopf (10) und der Oberseite des zweiten Teils (3) positioniert wird und indem die Schraube festgezogen wird, wobei die Dicke des Abstandselements (9) größer als die Gesamtheit der Flanschdicke und der Dicke des zweiten Teils (2) an dem Schraubenloch ist.

## Revendications

1. Liaison filetée entre une première partie (2) présentant un évidement (4) qui débouche vers l'extérieur, et une deuxième partie (3) qui présente, s'étendant à travers elle, au moins un trou (13) à travers lequel la liaison filetée s'étend, laquelle liaison filetée comporte une vis (7), un écrou (8), vissé sur celle-ci, qui est conçu pour pouvoir être introduit dans l'évidement (4) de la première partie (2) entre les rebords (5, 6) qui sont l'un en face de l'autre et sont situés dans l'évidement, et pour pouvoir tourner, à l'aide de la vis qui peut être serrée, vers une position de blocage sous les rebords, l'écrou étant conçu pour s'appuyer contre les rebords à partir du dessous et, ainsi, pour bloquer ensemble les première et deuxième parties (2, 3) en serrant la vis, **caractérisée en ce que** la vis (7) présente entre sa tête (10) et son filetage (11) une partie non filetée (12) dont la longueur est supérieure à l'épaisseur de la deuxième partie (3) au niveau du trou fileté (13).

2. Liaison filetée selon la revendication 1, **caractérisée en ce que** la longueur de la partie non filetée (12) n'est pas supérieure à la somme de l'épaisseur des rebords et de l'épaisseur de la deuxième partie (3) au niveau du trou fileté (13).

3. Liaison filetée selon la revendication 1 ou 2, **caractérisée en ce que**, pour l'assemblage des première et deuxième parties (2, 3), l'écrou (8) peut être fixé dans sa position de fixation contre le côté inférieur de la deuxième partie (3) en plaçant un élément d'espacement (9) entre la tête (10) de la vis et le côté supérieur de la deuxième partie (3) et en serrant la vis, l'épaisseur de l'élément d'espacement (9) étant supérieure à la somme de l'épaisseur des rebords et de l'épaisseur de la deuxième partie (2) au niveau du trou fileté.
